# EUROPEAN PATENT SPECIFICATION

(11) **EP 4 271 181 B1**
(45) Date of publication and mention of the grant of the patent: **16.09.2026**
(21) Application number: 21911891.6
(22) Date of filing: 13.12.2021
(51) Int. Cl.: A01K 89/033, A01K 89/015, A01K 89/0155, A01K 89/02

(54) **FISHING REEL**
FISCHROLLE
MOULINET DE PÊCHE

(30) Priority: 22.12.2020 US 202063128895 P
(43) Date of publication of application: 08.11.2023
(73) Proprietor: Pure Fishing, Inc., Spirit Lake, IA 51360 (US)
(72) Inventor: PARKER, Benjamin Philip, Chardon, OH 44024 (US); SEBASTIAN, William, Northfield, OH 44067 (US); RABBITT, William Eugene, Chesterland, OH 44026 (US); SOREO, Robert F., Cleveland Heights, OH 44118 (US)
(74) Representative: Cabinet Beau de Loménie
(86) International application number: PCT/US2021/063053
(87) International publication number: WO 2022/140096

(56) References cited:
- WO-A1-87/07942
- JP-A- 2002 000 139
- US-A- 4 402 470
- US-A- 5 395 065
- US-A- 6 045 076
- US-A1- 2004 148 843
- US-A1- 2009 095 835
- US-A1- 2019 366 203

## Description

### BACKGROUND

A bait cast fishing reel has a shortcoming referred to as backlash, which occurs when the reel spool overruns the outgoing line, causing the outgoing line to be caught and pulled back under the rotating spool, resulting in a knotted tangle of line commonly referred to as a "bird's nest."

Several patents have disclosures attempting to solve the problem of backlash, one of which being US 7,784,724 B2, which is directed to a non-contact line sensor that captures image data of a backlash condition of fishing line as the fishing line travels through a backlash zone over time. Considering the components listed in this patent, a control loop result for determining a backlash condition is around 100 milliseconds. Similarly, US 8,439,290 B2 employs a line behavior sensor having means for digital imaging where the sensor generates output signals derived from recorded images of fishing line as the line is paying out. In US 8,439,290 B2, a computer is associated with the sensor and compares the output signals to control a brake mechanism. US 6,045,076 B1 discloses a photo emitter that emits a light beam and a portion of the emitted light beam hits a bundle of line wrapped tightly around a spool where it is totally reflected back to a photo detector. In US 6,045,076 B1, a portion of the light beam that does not reflect from the bundle of tightly wrapped line is transmitted and absorbed by an infrared absorbing material on an opposite side of the spool so as not to influence the detection of reflected light.

In view of the foregoing, fishing reels that employ mechanisms to determine a backlash condition can be improved to more quickly determine the backlash condition and reducing the size of the mechanism for determining the backlash condition.

A fishing reel which supports at its body frame a spool freely rotatably by disengagement of a clutch of US 4,402,470 A is provided with a first detector which detects a drawing-out speed of a fishing line wound onto the spool, a second detector which detects a rotational speed of the spool, a processor having an arithmetic unit and connecting with the output lines of the detectors, and an actuator operative by an output signal from the processor which controls application of a rotational resistance against free rotation of the spool.

### SUMMARY

In view of the foregoing, a fishing reel is defined in the claims and includes a frame, a spool coupled to the frame for rotation about a rotational axis, a light source, a first optic, a sensor, a second optic, a controller, and a braking mechanism. The spool includes a first flange at or adjacent one end of the spool and a second flange at or adjacent an opposite end of the spool. The first optic is positioned in relation to the light source and the spool such that light emanating from the light source and passing through the first optic generates a substantially collimated band of light parallel with the rotational axis. The second optic is positioned in relation to the light source, the spool, and the sensor, and is configured to focus the substantially collimated band of light toward the sensor. The controller is electrically coupled to the sensor and is configured to receive signals from the sensor and to generate a braking signal based on received signals from the sensor. The braking mechanism is electrically coupled to the controller, and the braking mechanism applies a braking force to slow the spool in response to the braking signal from the controller.

Each of the first flange and the second flange includes at least one
respective flange opening extending therethrough, and the substantially collimated band of light passes through the respective flange openings. More particularly, each of the first flange and the second flange can include a plurality of respective flange openings extending therethrough.

For the fishing reel, the light source can be a light emitting diode (LED) like a single LED.

For the fishing reel, each of the first optic and the second optic is a Fresnel lens of an aspheric lens.

The first optic can be positioned in relation to the light source such that the substantially collimated band of light extends outwardly in a direction perpendicular to the rotational axis outside of an outer diameter of the first flange and/or the second flange.

The second optic can be identical in configuration to the first optic and rotated 180 degrees from the orientation of the first optic about an axis perpendicular to the rotational axis.

The sensor is a PIN diode that converts optical signals into electrical signals.

The controller can be a low-power 8 or 32 bit microcontroller.

The sensor works with the controller to detect a difference in gain.

The controller is configured to generate and deliver the braking signal to the braking mechanism upon detecting a non-linear drop in gain.

The fishing reel can include a regenerative power source.

### BRIEF DESCRIPTION OF THE DRAWINGS

FIG. 1 is a schematic depiction of relevant components of a fishing reel.
FIG. 2 is a perspective view of a spool and a spool shaft for the fishing reel depicted in FIG. 1

### DETAILED DESCRIPTION

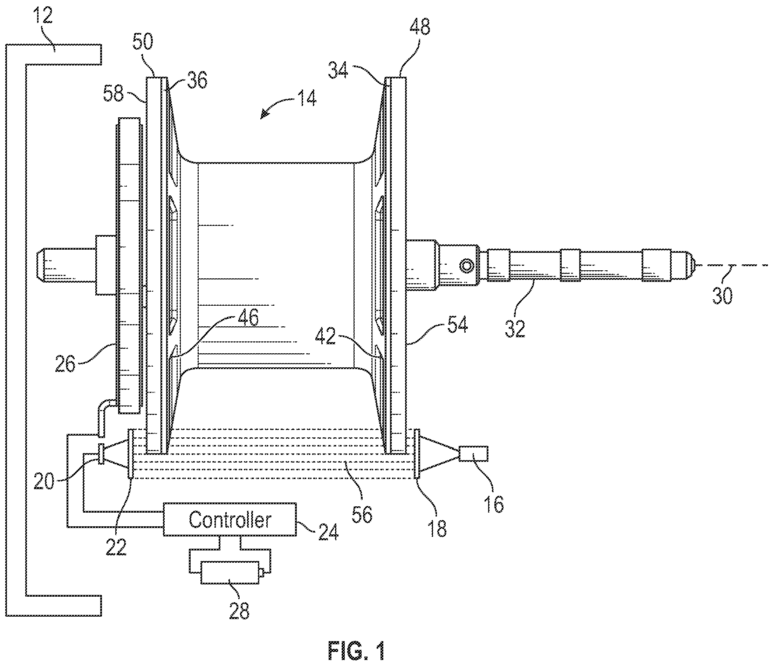

FIG. 1 depicts an example of components of a fishing reel 10 including a frame 12, a spool 14, a light source 16, a first optic 18, a sensor 20, a second optic 22, a controller 24, and a braking mechanism 26. The fishing reel 10 can further include a power source 28 for powering the light source 16, the sensor 20, the controller 24, and the braking mechanism 26. The power source can be a battery, for example, or a regenerative power source that is operatively connected to a spool drive (only a portion of which shown). The spool drive can be conventionally known and operatively with the spool 14, a line guide (also not shown), and a crank handle (not shown). The spool drive typically includes at least one gear train and upon being driven by the crank handle, the spool drive rotates the spool 14 and reciprocates the line guide in a conventionally known manner to retrieve fishing line wound around the spool 14. The spool drive can also include a clutch (also not shown) that is conventionally known and is operatively coupled between the spool 14 and the spool drive along with a drag mechanism. When the clutch is engaged, the spool drive and the drag are operatively coupled to the spool 14. As a result, rotation of the crank handle rotates the spool 14 to retrieve fishing spool 14. The spool drive can also include a clutch (also not shown) that is conventionally known and is operatively coupled between the spool 14 and the spool drive along with a drag mechanism. When the clutch is engaged, the spool drive and the drag are operatively coupled to the spool 14. As a result, rotation of the crank handle rotates the spool 14 to retrieve fishing line. At the same time, the drag mechanism slows reverse rotation of the spool 14 to release the fishing line. When the clutch is disengaged, to uncouple the spool 14 from the spool drive and the drag mechanism, the spool 14 is substantially free to rotate in a reverse direction to release fishing line such as during casting. During casting, unless appropriately braked, the spool 14 may rotate at a velocity faster than the velocity of the bait or lure and line being cast, which can result in backlash.

Only a portion of the frame 12 is depicted in FIG. 1. The frame 12 supports the spool 14, the light source 16, the first optic 18, the sensor 20, the second optic 22, the controller 24, and the braking mechanism 26 along with other components of the fishing reel 10. The frame 12 can additionally house the aforementioned components along with the spool drive, and the drag mechanism. The frame 12 can be made from various materials and come in a variety of different shapes and sizes.

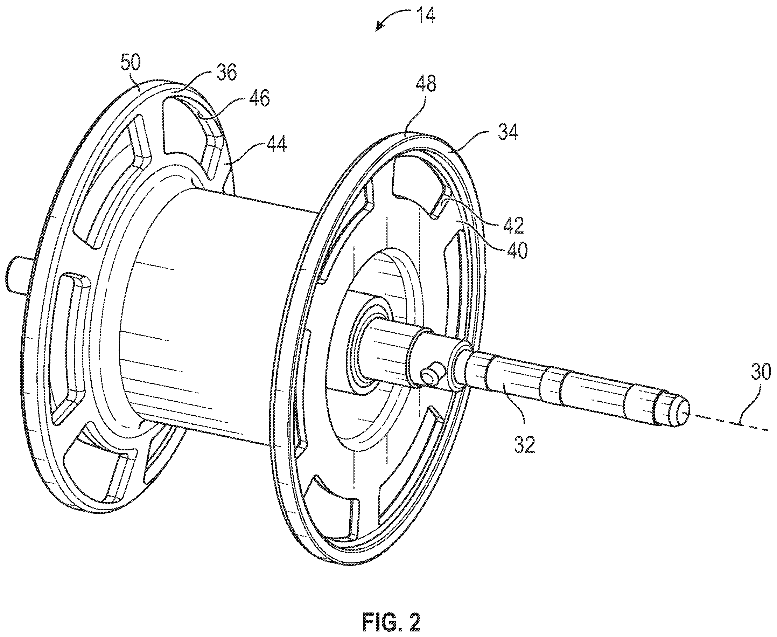

The spool 14 is coupled to the frame 12 for rotation about a rotational axis 30. The spool 14 mounts to a spool shaft 32 and includes a first flange 34 at or adjacent one end of the spool 14 and a second flange 36 at or adjacent an opposite end of the spool 14. The spool 14 is also operatively coupled to the spool drive and the drag mechanism. The spool 14 carries fishing line (not shown), which is wrapped around the spool 14 in between the first flange 34 and the second flange 36. In the illustrated embodiment and with reference to FIG. 2, the first flange 34 includes first flange spokes 40 separating and partially bounding first flange openings 42 extending through the first flange 34. Similarly, the second flange 36 includes second flange spokes 44 separating and partially bounding second flange openings 46 extending through the second flange 36. Each of the first flange 34 and the second flange 36 are shown as including six respective flange openings 42, 46; however, a fewer or greater number can be provided in each of the flanges 34, 36. Each of the flange openings 42, 46 is offset inwardly from a respective outer diameter 48, 50 of each flange 34, 36.

With reference back to FIG. 1, the light source 16 is positioned outwardly offset in a direction parallel to the rotational axis 30 from an outer side 54 of the first flange 34. The outer side 54 being the side of the first flange 34 opposite the side that is facing the fishing line wrapped around the spool 14. The light source 16 can be a light emitting diode (LED). More particularly, the light source 16 can be a single LED, which can facilitate miniaturization of the anti-backlash system.

The first optic 18 is positioned in relation to the light source 16 and the spool 14 such that light emanating from the light source 16 and passing through the first optic 18 generates a substantially collimated band of light 56 parallel with the rotational axis 30 of the spool 14. Examples of such an optic that can be used for the first optic 18 include a lens similar to a Fresnel lens as well as an aspheric lens. The light source 16 and the first optic 18 are cooperatively designed such that the substantially collimated band of light 56 passes through the flange openings 42, 46 in the respective flanges 34, 36. The light source 16 and the first optic 18 can also be cooperatively designed such that the substantially collimated band of light travels parallel with the rotational axis 30 radially outside with respect to a direction perpendicular to the rotational axis 30 of the respective outer diameter 48, 50 of each of the first flange 34 and the second flange 36. The first optic 18 is also positioned outwardly offset in a direction parallel with the rotational axis 30 from the outer side 54 of the first flange 34 and is interposed between the light source 16 and the first flange 34.

The sensor 20 is positioned outwardly offset in a direction parallel with the rotational axis 30 from an outer side 58 of the second flange 36. The sensor 20 is PIN diode that converts optical signals into electrical signals. The sensor 20 works with the controller 24 to detect a difference in gain (light received), which can be indicative of a loop of fishing line coming off the spool 14 just prior to a backlash condition. The gain typically increases as fishing line comes off the spool 14 during a cast because the diameter of the wound fishing line gradually decreases as the fishing line is paying out allowing more light from the substantially collimated band of light 56 to reach the sensor 20. This will result in a linear drop in gain as the cast progresses. The controller 24 is configured to detect a non-linear drop in gain, which can be indicative of a loop condition. Upon detecting a non-linear drop in gain, the controller 24 generates and delivers a braking signal to the braking mechanism 26. Other types of light sensors than PIN diode can also be employed; however the use of a PIN diode can facilitate miniaturization of the anti-backlash system.

The second optic 22 is positioned in relation to the light source 16, the spool 14, and the sensor 20 and is configured to focus the substantially collimated band of light 56 toward the sensor 20. The second optic 22 is also positioned outwardly offset in a direction parallel with the rotational axis 30 from the outer side 58 of the second flange 36. The second optic 22 is positioned between the sensor 20 and the outer side 58 of the second flange 36. The second optic 22 can be identical in configuration to the first optic 18, but the orientation of the second optic 22 is different than the first optic 18 in that the second optic 22 is rotated 180 degrees from the orientation of the first optic 18 about an axis perpendicular to the rotational axis 30. Such an orientation allows the second optic 22 to focus the collimated band of light 56 toward the sensor 20, which can allow for miniaturization of the anti-backlash system.

The controller 24 is coupled to the sensor 20 and is configured to receive signals from the sensor 20 and to generate a braking signal based on the received signals from the sensor 20. The controller 24 can be, for example, a low-power 8 or 32 bit microcontroller. The braking mechanism 26, which can be a conventional braking mechanism such as the braking mechanism described in US 7,784,724 B2 or the braking mechanism described in US 6,412,722 B1, is coupled to the controller 24. The braking mechanism 26 applies a braking force to slow the spool 14 in response to the braking signal received from the controller 24.

The first optic 18 working in conjunction with the light source 16 results in the ability for a single LED, if desired, to spread the light evenly over a generally small rectangular area, such as a 10 mm x 2 mm area. This substantially collimated band of light 56 is received by the second optic 22 that focuses the collimated band of light 56 back down to a small diameter that is received by the sensor 20. Providing the substantially collimated band of light 56 allows the sensor 20 to "see" a line loop anywhere within the rectangular area. As an example, if the spool 14 is full of line and a long cast is made, the diameter of the line on the spool 14 decreases as the line comes off. With a long cast, this can amount to a significant diameter change. **If** the first optic 18 generated a round beam of light, the sensor 20 would only be able to detect a gain change over a small area as the diameter changes during the cast, and the round beam would need to keep getting larger for the sensor 20 to detect possible line loops. With a monofilament line, this is a greater issue because line memory prevents large loops from forming. The generally rectangular beam depicted as the substantially collimated band of light 56 allows the use of one **LED** and one photo detector, which can miniaturize the anti-backlash detection system. Even if a small loop of line begins to generate on the spool, it can be detected regardless of how much line remains on the spool 14 during the cast. This provides an anti-backlash system with significantly more resolution than simply using a round beam photo detector and a highly divergent output from an LED. By using the components and arrangements discussed above, the control loop result to determine a backlash condition is around 50 microseconds, which is much quicker than the prior art designs.

## Claims

1. A fishing reel comprising:
a frame (12);
a spool (14) coupled to the frame for rotation about a rotational axis (30) and including a first flange (34) at or adjacent one end to the spool and a second flange (36) at or adjacent an opposite end of the spool;
a light source (16);
a first optic (18) being a Fresnel lens or an aspheric lens and positioned in relation to the light source and the spool such that light emanating from the light source and passing through the first optic generates a substantially collimated band of light parallel with the rotational axis;
a sensor (20) being a PIN diode that converts optical signals into electrical signals;
a second optic (22) being a Fresnel lens or an aspheric lens and positioned in relation to the light source, the spool and the sensor and configured to focus the substantially collimated band of light toward the sensor;
a controller (24) electrically coupled to the sensor and configured to receive signals from the sensor and to generate and deliver a braking signal to the braking mechanism (26) upon detecting a non-linear drop in gain, the sensor (20) working with the controller (24) to detect a difference in gain; and
a braking mechanism (26) electrically coupled to the controller, wherein the braking mechanism applies a braking force to slow the spool in response to the braking signal from the controller,
wherein each of the first flange (34) and the second flange (36) include at least one respective flange opening (42,46) extending therethrough, and the substantially collimated band of light passes through the respective flange openings.

2. The fishing reel of claim 1, wherein each of the first flange (34) and the second flange (36) include a plurality of respective flange openings (42,46) extending therethrough.

3. The fishing reel of claim 1 or 2, wherein the light source (16) is a light emitting diode (LED).

4. The fishing reel of claim 3, wherein the light source (16) is a single LED.

5. The fishing reel of any of claims 1 to 4, wherein the first optic (18) is positioned in relation to the light source (16) such that the substantially collimated band of light extends outwardly in a direction perpendicular to the rotational axis (30) outside of an outer diameter of the first flange (34).

6. The fishing reel of claim 5, wherein the first optic (18) is positioned in relation to the light source (16) such that the substantially collimated band of light extends outwardly in a direction perpendicular to the rotational axis (30) outside of a respective outer diameter of each of the first flange (34) and the second flange (36).

7. The fishing reel of any of claims 1 to 6, wherein the second optic (22) is identical in configuration to the first optic (18) and is rotated 180 degrees from the orientation of the first optic about an axis perpendicular to the rotational axis (30).

8. The fishing reel of any of claims 1 to 7, wherein the controller (24) is a low-power 8 or 32 bit microcontroller.

9. The fishing reel of any of claims 1 to 8, further comprising a regenerative power source (28).

10. The fishing reel of claim 1, 2, 3 and 4, wherein the light source (16) is positioned outwardly offset in a direction parallel to the rotational axis (30) from an outer side of the first flange (34) and the first optic (18) is positioned between the light source (16) and the spool such that light emanating from the light source and passing through the first optic generates a substantially collimated band of light parallel with the rotational axis and the substantially collimated band of light parallel through the respective flange openings and outwardly in a direction perpendicular to the rotational axis (30) outside of a respective outer diameter of each of the first flange and the second flange.

## Patentansprüche

1. Angelrolle, umfassend:
einen Rahmen (12);
eine Spule (14), die mit dem Rahmen zur Drehung um eine Rotationsachse (30) herum gekoppelt ist und einen ersten Flansch (34) an oder neben einem Ende der Spule und einen zweiten Flansch (36) an oder neben einem gegenüberliegenden Ende der Spule umfasst;
eine Lichtquelle (16);
eine erste Optik (18), bei der es sich um eine Fresnel-Linse oder eine asphärische Linse handelt und die im Verhältnis zu der Lichtquelle und der Spule derart angeordnet ist, dass Licht, das von der Lichtquelle ausgeht und durch die erste Optik hindurch geht, ein im Wesentlichen kollimiertes Lichtband parallel zur Rotationsachse erzeugt;
einen Sensor (20), bei dem es sich um eine PIN-Diode handelt, die optische Signale in elektrische Signale umwandelt;
eine zweite Optik (22), bei der es sich um eine Fresnel-Linse oder eine asphärische Linse handelt und die im Verhältnis zu der Lichtquelle, der Spule und dem Sensor positioniert ist, um das im Wesentlichen kollimierte Lichtband in Richtung auf den Sensor zu fokussieren;
einen Controller (24), der mit dem Sensor elektrisch gekoppelt ist und dazu konfiguriert ist, Signale von dem Sensor zu empfangen und ein Bremssignal zu erzeugen und an den Bremsmechanismus (26) abzugeben, wenn ein nicht linearer Verstärkungsabfall erkannt wird, wobei der Sensor (20) mit dem Controller (24) arbeitet, um eine Verstärkungsdifferenz zu erkennen; und
einen Bremsmechanismus (26), der mit dem Controller elektrisch gekoppelt ist, wobei der Bremsmechanismus eine Bremskraft ausübt, um die Spule als Reaktion auf das Bremssignal von dem Controller zu verlangsamen,
wobei jeder von dem ersten Flansch (34) und dem zweiten Flansch (36) mindestens eine jeweilige sich durch diesen hindurch erstreckende Flanschöffnung (42, 46) umfasst, und das im Wesentlichen kollimierte Lichtband durch die jeweiligen Flanschöffnungen hindurch geht.

2. Angelrolle nach Anspruch 1, wobei jeder von dem ersten Flansch (34) und dem zweiten Flansch (36) eine Vielzahl von jeweiligen sich Flanschöffnungen (42, 46) umfasst, die sich durch diese hindurch erstrecken.

3. Angelrolle nach Anspruch 1 oder 2, wobei die Lichtquelle (16) eine Leuchtdiode (LED) ist.

4. Angelrolle nach Anspruch 3, wobei die Lichtquelle (16) eine einzelne LED ist.

5. Angelrolle nach einem der Ansprüche 1 bis 4, wobei die erste Optik (18) im Verhältnis zu der Lichtquelle (16) derart positioniert ist, dass sich das im Wesentlichen kollimierte Lichtband in einer Richtung, die zu der Rotationsachse (30) senkrecht steht, außerhalb eines Außendurchmessers des ersten Flansches (34) nach außen erstreckt.

6. Angelrolle nach Anspruch 5, wobei die erste Optik (18) im Verhältnis zu der Lichtquelle (16) derart positioniert ist, dass sich das im Wesentlichen kollimierte Lichtband in einer Richtung, die zu der Rotationsachse (30) senkrecht steht, außerhalb eines jeweiligen Außendurchmessers jedes von dem ersten Flansch (34) und dem zweiten Flansch (36) nach außen erstreckt.

7. Angelrolle nach einem der Ansprüche 1 bis 6, wobei die zweite Optik (22) zu der ersten Optik (18) konfigurationsmäßig identisch ist und gegenüber der Orientierung der ersten Optik um eine Achse herum, die zu der Rotationsachse (30) senkrecht steht, um 180 Grad gedreht ist.

8. Angelrolle nach einem der Ansprüche 1 bis 7, wobei der Controller (24) ein energiesparender 8- oder 32-Bit-Mikrocontroller ist.

9. Angelrolle nach einem der Ansprüche 1 bis 8, ferner umfassend eine regenerative Energiequelle (28).

10. Angelrolle nach Anspruch 1, 2, 3 und 4, wobei die Lichtquelle (16) in einer Richtung, die zu der Rotationsachse (30) parallel ist, von einer äußeren Seite des ersten Flansches (34) aus nach außen versetzt positioniert ist, und die erste Optik (18) zwischen der Lichtquelle (16) und der Spule derart positioniert ist, dass Licht, das von der Lichtquelle ausgeht und durch die erste Optik hindurch geht, ein im Wesentlichen kollimiertes Lichtband parallel zur Rotationsachse erzeugt und sich das im Wesentlichen kollimierte Lichtband parallel durch die jeweiligen Flanschöffnungen hindurch und in einer Richtung, die zu der Rotationsachse (30) senkrecht steht, außerhalb eines Außendurchmessers jedes von dem ersten Flansch und dem zweiten Flansch nach außen erstreckt.

## Revendications

1. Moulinet de pêche comprenant :
un bâti (12) ;
une bobine (14) couplée au bâti pour tourner autour d'un axe de rotation (30) et comprenant une première bride (34) au niveau de ou adjacente à une extrémité de la bobine et une deuxième bride (36) au niveau ou adjacente à une extrémité opposée de la bobine ;
une source de lumière (16) ;
une première optique (18) qui est une lentille de Fresnel ou une lentille asphérique et positionnée par rapport à la source de lumière et à la bobine de sorte que la lumière émanant de la source de lumière et passant par la première optique génère une bande de lumière sensiblement collimatée parallèle à l'axe de rotation ;
un capteur (20) qui est une diode PIN qui convertit les signaux optiques en signaux électriques ;
une deuxième optique (22) qui est une lentille de Fresnel ou une lentille asphérique et positionnée par rapport à la source de lumière, à la bobine et au capteur et configurée pour concentrer la bande de lumière sensiblement collimatée vers le capteur ;
un organe de commande (24) électriquement couplé au capteur et configuré pour recevoir des signaux du capteur et pour générer et délivrer un signal de freinage au mécanisme de freinage (26) suite à la détection d'une diminution non linéaire du gain, le capteur (20) fonctionnant avec l'organe de commande (24) pour détecter une différence de gain ; et
un mécanisme de freinage (26) électriquement couplé à l'organe de commande, dans lequel le mécanisme de freinage applique une force de freinage pour ralentir la bobine en réponse au signal de freinage provenant de l'organe de commande,
dans lequel chacune parmi la première bride (34) et la deuxième bride (36) comprend au moins une ouverture de bride (42, 46) respective s'étendant à travers cette dernière, et la bande de lumière sensiblement collimatée passe à travers les ouvertures de bride respectives.

2. Moulinet de pêche selon la revendication 1, dans lequel chacun parmi la première bride (34) et la deuxième bride (36) comprend une pluralité d'ouvertures de bride (42, 46) respectives s'étendant à travers ce dernier.

3. Moulinet de pêche selon la revendication 1 ou 2, dans lequel la source de lumière (16) est une diode d'émission de lumière (LED).

4. Moulinet de pêche selon la revendication 3, dans lequel la source de lumière (16) est une LED unique.

5. Moulinet de pêche selon l'une quelconque des revendications 1 à 4, dans lequel la première optique (18) est positionnée par rapport à la source de lumière (16) de sorte que la bande de lumière sensiblement collimatée s'étend vers l'extérieur dans une direction perpendiculaire à l'axe de rotation (30) à l'extérieur d'un diamètre externe de la première bride (34).

6. Moulinet de pêche selon la revendication 5, dans lequel la première optique (18) est positionnée par rapport à la source de lumière (16) de sorte que la bande de lumière sensiblement collimatée s'étend vers l'extérieur dans une direction perpendiculaire à l'axe de rotation (30) à l'extérieur d'un diamètre externe respectif de chacune parmi la première bride (34) et la deuxième bride (36).

7. Moulinet de pêche selon l'une quelconque des revendications 1 à 6, dans lequel la deuxième optique (22) est identique, du point de vue de la configuration, à la première optique (18) et tourne à 180 degrés par rapport à l'orientation de la première optique autour d'un axe perpendiculaire à l'axe de rotation (30).

8. Moulinet de pêche selon l'une quelconque des revendications 1 à 7, dans lequel l'organe de commande (24) est un microcontrôleur basse consommation de 8 ou 32 bits.

9. Moulinet de pêche selon l'une quelconque des revendications 1 à 8, comprenant en outre une source d'alimentation régénérative (28).

10. Moulinet de pêche selon les revendications 1, 2, 3 et 4, dans lequel la source de lumière (16) est positionnée avec un décalage vers l'extérieur dans une direction parallèle à l'axe de rotation (30) à partir d'un côté externe de la première bride (34) et la première optique (18) est positionnée entre la source de lumière (16) et la bobine de sorte que la lumière émanant de la source de lumière et passant à travers la première optique génère une bande de lumière sensiblement collimatée parallèle à l'axe de rotation et la bande de lumière sensiblement collimatée étant parallèle à travers les ouvertures de bride respectives et vers l'extérieur dans une direction perpendiculaire à l'axe de rotation (30) à l'extérieur d'un diamètre externe respectif de chacune parmi la première bride et la deuxième bride.
